# EUROPEAN PATENT APPLICATION

(11) **EP 4 166 032 A1**
(43) Date of publication of application: **19.04.2023**
(21) Application number: 21826787.0
(22) Date of filing: 15.06.2021
(51) Int. Cl.: A44B 18/00

(54) **RESIN SHEET WITH LARGE NUMBER OF WALL-LIKE PROJECTIONS PRESENT IN PARALLEL ON ONE SURFACE**

(30) Priority: 16.06.2020 JP 2020103483
(71) Applicant: Kuraray Fastening Co., Ltd., Osaka-shi, Osaka 530-8611 (JP)
(72) Inventor: ONO, Satoru, Okayama-shi, Okayama 702-8045 (JP); FUJISAWA, Yoshikatsu, Sakai-shi, Fukui 910-0273 (JP)
(74) Representative: Müller-Boré & Partner Patentanwälte PartG mbB
(86) International application number: PCT/JP2021/022618
(87) International publication number: WO 2021/256454

(57) **Abstract**

There is provided a resin sheet comprising: a sheet-like substrate of a resin; and wall-like projections (W) of the same resin having a certain height and standing upright on one surface of the substrate, wherein the wall-like projections (W) are arranged on the surface of the substrate in at least 10 parallel rows with a certain spacing, and wherein a large number of the wall-like projections (W), which satisfy the conditions (1) to (5) described in the specification, are present in parallel on the one surface of the substrate. The resin sheet is useful as a directional male hook-and-loop fastener whose male engaging elements are unlikely to break when a force is applied thereto and which does not provide a stimulus to the skin when it touches the surface of the fastener, as a filter for separating fine particles from a fluid, and as a display resin sheet.

## Description

### Technical Field

The present invention relates to a resin sheet having a large number of parallel wall-like projections present on one surface, and to use of the resin sheet. In particular, the present invention relates to a resin sheet comprising a sheet-like substrate of a synthetic resin, and a large number of wall-like projections of the same resin having a certain height and arranged in parallel on one surface of the substrate with a certain spacing, the wall-like projections each being divided into divisions having a certain length in the longitudinal direction of the wall-like projections (hereinafter sometimes referred to simply as the longitudinal direction) by a large number of cut portions disposed at regular intervals, and to use of the resin sheet, for example, as a male hook-and-loop fastener to be used as an engaging counterpart of a loop hook-and-loop fastener, as a filter for separating fine particles from a fluid, or as a display resin sheet with colored wall-like projections.

### Background Art

A conventionally-used method for attaching a target to the surface of an object involves: attaching a male hook-and-loop fastener having hook-shaped or mushroom-shaped male engaging elements (hereinafter sometimes referred to simply as a male hook-and-loop fastener) to the surface of one of the object and the target, and attaching a loop hook-and-loop fastener having loop-shaped engaging elements (hereinafter sometimes referred to simply as a loop hook-and-loop fastener) to the surface of the other; and bringing the engaging element surfaces of the two fasters into contact with each other to engage the both engaging elements, thereby fixing the target to the surface of the object. Such an attachment method or means is very useful because attachment/detachment can be repeated a number of times by repeating engagement/peeling and, in addition, if the target is attached to the object at an inappropriate position, the target can be easily peeled from and re-attached to the object at an adjusted position.

A known male hook-and-loop fastener has a directionality in the engagement force. For example, patent document 1 describes a male hook-and-loop fastener whose engagement force varies directionally. The fastener comprises a substrate of a thermoplastic resin, and a large number of stems of the same resin provided on the substrate, the steps being inclined in the same direction. When a loop hook-and-loop fastener approaches the male fastener from the stem inclination direction, the loop-shaped engaging elements of the loop fastener engage the stems and the two fasteners are integrated. When the loop hook-and-loop fastener approaches the male fastener from the opposite direction, the loop-shaped engaging elements do not engage the stems.

Patent document 2 describes a male hook-and-loop fastener whose engagement force varies directionally, comprising a resin substrate and a large number of stems standing substantially upright on the substrate and arranged in rows. Each stem has a projection projecting from the top of the stem in a direction intersecting the stem row direction and parallel to the substrate. All the projections of the stems project in the same direction. As with the hook-and-loop fastener of patent document 1, when a loop hook-and-loop fastener approaches the male fastener from the projection projecting direction, the loop-shaped engaging elements of the loop fastener engage the projecting portions and the two fasteners engage each other. When the loop hook-and-loop fastener approaches the male fastener from the opposite direction, the loop-shaped engaging elements do not engage the projecting portions.

Such hook-and-loop fasteners can be advantageously used in applications where two objects are integrated under constant tension, such as a wall-mounting member for hanging an item on a wall, a cuff of a blood pressure monitor, a tightening member for tightening an upper of a shoe, a wrist of a glove, or the like, and a fastener for a medial supporter or a brassiere.

However, such male hook-and-loop fasteners having a directionality have the problem of the base of a stem or a projection being likely to break when a great force is applied to the stem from a loop-shaped engaging element in engagement with the stem or from the male hook-and-loop fastener. In particular, the male hook-and-loop fastener described in patent document 2 has the problem of a projection, projecting at right angle from each stem, being broken at the base when a pressure is applied on the projection. In the case of the male hook-and-loop fastener of patent document 1, the large number of thin stems extend obliquely upward from the substrate surface. Therefore, when a hand or skin of a person touches the surface of the male hook-and-loop fastener, the sharp tops of the stems may provide an uncomfortable feeling to the person.

### Citation List

### Patent Literature

Patent document 1: Japanese Patent Laid-Open Publication No. 2011-24864
Patent document 2: International Publication No. WO 2015/137114

### Summary of Invention

### Technical Problem

It is an object of the present invention to solve the above problems and provide a resin sheet which can be bent freely, and is suited for a male hook-and-loop fastener having a directionality in the engagement force, whose male engaging elements are unlikely to break when a force is applied thereto and which does not provide a stimulus to the skin when it touches the surface of the fastener. It is also an object of the present invention to provide a resin sheet which can also be advantageously used in applications other than such a male hook-and-loop fastener having a directionality in the engagement force, for example, a display, a filter for separating fine particles from a fluid, and a sheet that can diffuse a fluid uniformly in a structure.

### Solution to Problem

Thus, the present invention provides aa resin sheet comprising: a sheet-like substrate of a resin; and wall-like projections (W) of the same resin having a certain height and standing upright on one surface of the substrate, wherein the wall-like projections (W) are arranged on the surface of the substrate in at least 10 parallel rows with a certain spacing, and wherein a large number of the wall-like projections (W), which satisfy the following conditions (1) to (5), are present in parallel on the one surface of the substrate:
(1) each wall-like projection (W) has a large number of cut portions (C), penetrating the wall-like projection (W) in the thickness direction and extending from the bottom to the top of the wall-like projection (W), disposed at substantially equal intervals in the longitudinal direction of the wall-like projection (W), and the wall-like projection (W) is divided in the longitudinal direction by the cut portions (C) into a large number of wall divisions (Wd) and forms a row of the large number of wall divisions;
(2) each wall division (Wd) has substantially the same thickness throughout the entire body from the base to the top, and the top of the wall division (Wd) has no projecting portion projecting upward from the top;
(3) a cut portion (C) in each wall-like projection (W) faces a wall surface of a wall division (Wd) in an adjacent wall-like projection (W), i.e., a wall surface of a wall division (Wd) is present at a position in a wall-like projection (W) which faces a cut portion (C) in an adjacent wall-like projection (W) in a direction perpendicular to the wall surface of the wall-like projection (W);
(4) the length (Lw) of each wall division (Wd) in the longitudinal direction of the wall-like projection (W) is longer than the length (Lc), in the longitudinal direction of the wall-like projection (W), of each cut portion (C) located at either end of the wall division (Wd) in the longitudinal direction; and
(5) the length (Lw) of each wall division (Wd), sandwiched between cut portions (C), in the longitudinal direction of the wall-like projection (W) is 2 to 6 times the height (H) of the wall division (Wd).

In the resin sheet, the length (Lw) of each wall division (Wd) in the longitudinal direction is preferably 0.8 to 20 mm;
the thickness (Tw) of each wall division (Wd) is preferably 0.1 to 1.0 mm; the height (H) of each wall division (Wd) is preferably 0.3 to 5.0 mm;
the distance (D) between each wall-like projection (W) and an adjacent wall-like projection (W) is preferably 1 to 3 times the thickness (Tw) of each wall division (Wd); and
the wall-like projections (W) are preferably present on the surface of the resin sheet at a density of 5 to 30 rows per cm of the width of the resin sheet and in at least 10 parallel rows.

The present invention also provides a filter comprising the above-described resin sheet, for separating fine particles from a fluid by allowing the fluid containing the fine particles to flow on the surface of the resin sheet in a direction intersecting the longitudinal direction of the wall-like projections (W). Thus, the present invention also provides a method for separating fine particles from a fluid, comprising allowing the fluid containing the fine particles to flow through a filter comprising the resin sheet, wherein the fluid is allowed to flow on the surface of the resin sheet in a direction intersecting the longitudinal direction of the wall-like projections (W).

The present invention also provides a resin sheet for display, comprising the above-described resin sheet, wherein the resin sheet is formed of a transparent resin, and at least part of the tops of the wall divisions (Wd) are colored.

The present invention also provides a resin sheet for display, comprising the above-described resin sheet, wherein the resin sheet is formed of a transparent resin, and at least part of the area other than the tops of the wall divisions (Wd) is colored.

The present invention also provides a resin sheet for a male hook-and-loop fastener for use with a loop hook-and-loop fastener, having loop-shaped engaging elements, as an engaging counterpart, comprising the above-described resin sheet which further satisfies the following conditions (6) to (8):
(6) a projecting portion (P) projecting in a direction toward a cut portion (C) is formed at one end of the top of each wall division (Wd) in the longitudinal direction, whereas no projecting portion projecting in a direction toward a cut portion (C) is formed at the other end;
(7) there is a gap between the front end of each projecting portion (P) and a wall division (Wd) located adjacent to the projecting portion (P) via a cut portion (C); and
(8) each wall division (Wd) has one projecting portion (P), and in almost all the wall divisions (Wd), the projecting portions (P) project in the same direction.

In the resin sheet for a male hook-and-loop fastener, the projection length (Lp) from the base of each projecting portion (P) is preferably 0.05 to 5.0 mm.

The present invention also provides a resin sheet as described above, further comprising shielding elements (F) standing on the substrate and disposed between adjacent wall-like projections (W) and which are configured to make the pressure loss of a fluid in the longitudinal direction of the wall-like projections (W) 0.7 to 1.3 times the pressure loss of the fluid in a direction perpendicular to the wall-like projections (W).

The height (H_{F}) of each shielding element (F) is preferably 0.8 to 0.98 times the height (H) of each wall division (Wd), the length (L_{F}) of each shielding element (F) in the longitudinal direction is preferably 0.3 to 1.0 times the length (Lc) of each cut portion (C) in the longitudinal direction, and the width (W_{F}) of each shielding element (F) is preferably 0.8 to 1.0 times the distance (D) between two adjacent rows of wall-like projections (W). The number of the shielding elements (F) is preferably 0.6 to 1.0 times the number of the wall divisions (Wd), and the shielding elements (F) are preferably disposed uniformly between adjacent rows of wall-like projections (W).

The present invention also provides, as use of the resin sheet including the shielding elements (F), a filter comprising the resin sheet, for separating fine particles from a fluid, without causing a non-uniform flow of the fluid, by allowing the fluid containing the fine particles to flow on the surface of the resin sheet in a direction intersecting the longitudinal direction of the wall-like projections (W) or parallel to the longitudinal direction of the wall-like projections (W). Thus, the present invention also provides a method for separating fine particles from a fluid, comprising allowing the fluid containing the fine particles to flow on the surface of the resin sheet in a direction intersecting the longitudinal direction of the wall-like projections (W) or parallel to the longitudinal direction of the wall-like projections (W).

### Advantageous Effects of Invention

In the resin sheet of the present invention, the wall-like projections (W) of a resin having a certain height are arranged in parallel rows on one surface of a substrate of the same resin. Each wall-like projection (W) has cut portions (C) disposed at equal intervals in the longitudinal direction, and the wall-like projection (W) is divided by the cut portions (C) into a large number of wall divisions (Wd) and forms a row of the large number of wall divisions. A cut portion (C) in each wall-like projection (W) faces a wall division (Wd) in an adjacent wall-like projection (W), i.e., a wall division (Wd) is present at a position in a wall-like projection (W) which faces a cut portion (C) in an adjacent wall-like projection (W) in a direction perpendicular to the wall-like projection (W).

Accordingly, when the resin sheet of the present invention is bent along a direction perpendicular to the longitudinal direction of the wall-like projections (W) (hereinafter sometimes referred to simply as the longitudinal direction), not a sharp but a beautiful natural smooth bend can be easily obtained. In general, in the case of a resin sheet with continuous wall-like projections standing on a surface of the sheet, it is difficult to bend the sheet along a direction perpendicular to the longitudinal direction of the wall-like projections because the wall-like projections hinder the bending. In the case of the resin sheet of the present invention in which each wall-like projection (W) is divided by cut portions (C), the presence of the cut portions (C) enables easy bending of the sheet along a direction perpendicular to the longitudinal direction of the wall-like projections (W). Furthermore, a wall division (Wd) is present at a position in each wall-like projection (W) which faces a cut portion (C) in an adjacent wall-like projection (W) in a direction perpendicular to the wall-like projection (W). Therefore, when the resin sheet is bent along a direction perpendicular to the wall-like projections (W), a beautiful natural smooth bend can be obtained without a local sharp bending.

As described above, a wall surface of a wall division (Wd) is present at a position in a wall-like projection (W) which faces a cut portion (C) in an adjacent wall-like projection (W) in a direction perpendicular to the wall surface of the wall-like projection (W). Thus, the positions of cut portions (C) in the longitudinal direction differ between two adjacent wall-like projections (W). Therefore, when a fluid containing fine particles is allowed to flow on the surface of the resin sheet in a direction intersecting the longitudinal direction of the wall-like projections (W), the fluid that has entered a cut portion (C) of a wall-like projection (W) hits the wall surface of a wall division (Wd) in the next row, whereby the momentum of the flow is reduced and the flow is separated into two oppositely-directed flows. Each flow enters a cut portion (C) on one end of the wall division (Wd), and hits the wall surface of a wall division (Wd) in the next row, whereby the momentum of the flow is reduced. When the fluid repeats such a movement, the fine particles are separated from the fluid, and fall onto and adhere to the wall surfaces of wall divisions (Wd), cut portions (C), and the substrate surface of the resin sheet. Therefore, the resin sheet of the present invention can be used as a filter for separating fine particles from a fluid.

In the resin sheet of the present invention, each wall-like projection (W) is cut by cut portions (C), and the longitudinal positions of cut portions (C) differ between adjacent wall-like projections (W). Therefore, the resin sheet can be rolled into a roll or a flat roll without a gap, or the resin sheets can be stacked without a gap. When the resin sheet of the present invention is rolled into a roll or a flat roll such that the circumferential direction coincides with a direction perpendicular to the longitudinal direction of the wall-like projections (W), and a fluid is allowed to flow from one end of the roll into the roll (i.e., in a direction perpendicular to the longitudinal direction of the wall-like projections (W)), or a plurality of the resin sheets are stacked, and a fluid is allowed to flow in a direction perpendicular to the longitudinal direction of the wall-like projections (W), a non-uniform flow of the fluid or "short pass" is unlikely to occur; therefore, such a structure can be used as a filter.

### Brief Description of Drawings

FIG. 1 is a schematic perspective enlarged view of a portion of a surface of a resin sheet which is an example of the resin sheet of the present invention and which is suited for a directional male hook-and-loop fastener.
FIG. 2 is a side view of the resin sheet shown in FIG. 1 as viewed in the X direction shown in FIG. 1.
FIG. 3 is a side view of the resin sheet shown in FIG. 1 as viewed in the Y direction shown in FIG. 1.
FIG. 4 is a side view of another example of the resin sheet of the present invention as viewed in a direction perpendicular to the wall surfaces of wall divisions (Wd) as in FIG. 2.
FIG. 5 is a side view of another example of the resin sheet of the present invention as viewed in a direction perpendicular to the wall surfaces of wall divisions (Wd) as in FIG. 2.
FIG. 6 is a schematic perspective enlarged view of a portion of a surface of a resin sheet which is another example of the resin sheet of the present invention and which includes shielding elements (F) provided on the surface.
FIG. 7 is a side view of another example of the resin sheet of the present invention, which is the same as the resin sheet shown in FIG. 6 (however, that the projecting portions (P) have a shape as shown in FIG. 4) as viewed in the X direction shown in FIG. 6.
FIG. 8 is a side view of the resin sheet shown in FIG. 6, which is another example of the resin sheet of the present invention, as viewed in the Y direction shown in FIG. 6.

### Description of Embodiments

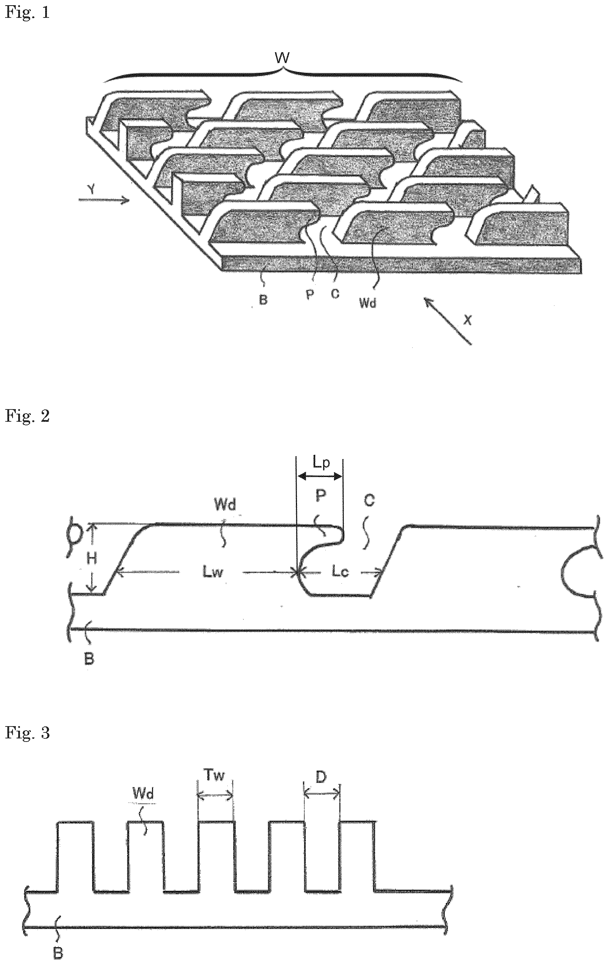

While the present invention will be described in detail with reference to the drawings, the present invention is not limited to the embodiments described in the drawings. FIG. 1 is a perspective view schematically showing an example of the resin sheet of the present invention. The resin sheet of FIG. 1 is especially suited for a directional male hook-and-loop fastener, and includes wall divisions (Wd) each having a projecting portion (P) projecting from the top toward a cut portion (C). FIG. 2 is a cross-sectional view of wall divisions (Wd) as viewed in the X direction shown in FIG. 1, and FIG. 3 is a cross-sectional view of the resin sheet as viewed in the Y direction shown in FIG. 1.

As shown in FIGS. 1 through 3, the resin sheet of the present invention includes a substrate (B) of a resin, and wall-like projections (W) of the same resin having a certain height (H) and standing upright on one surface of the substrate (B). The wall-like projections (W) each include wall divisions (Wd) arranged in a row in the longitudinal direction, and are arranged on the surface of the substrate (B) in parallel rows with a certain spacing (D). Each wall-like projection (W) has a large number of cut portions (C), penetrating the wall-like projection (W) in the thickness direction and extending from the bottom to the top of the wall-like projection (W), disposed at substantially equal intervals. The wall-like projection (W) is divided by the cut portions (C) into a large number of wall divisions (Wd); the wall-like projection (W) forms a row including the large number of wall divisions (Wd). Each wall division (Wd) has substantially the same thickness (Tw) throughout the entire body from the base to the top, and has no projecting portion projecting upward from the top.

Such a resin sheet is preferably produced by injection molding from the viewpoint of productivity, as will be described later. When the resin sheet is produced by injection molding, each wall division (Wd) preferably has no projecting portion projecting from the wall surface in a direction intersecting the longitudinal direction of the wall-like projections (W) from the viewpoint of productivity and also in view of the fact that there is no possibility of damage to such a projecting portion during the production of the resin sheet.

A cut portion (C) in each wall-like projection (W) faces a wall surface of a wall division (Wd) in an adjacent wall-like projection (W). That is, a wall surface of a wall division (Wd) is present at a position in a wall-like projection (W) which faces a cut portion (C) in an adjacent wall-like projection (W) in a direction perpendicular to the wall surface of the wall-like projection (W). Thus, the positions of cut portions (C) in the longitudinal direction differ between adjacent wall-like projections (W).

Preferably, a cut portion (C) faces a portion of a wall division (Wd) in an adjacent wall-like projection (W) in a direction perpendicular to the wall surface of the wall-like projection (W), the portion lying substantially at the center of the wall division (Wd) in the longitudinal direction. Preferably, the positions of cut portions (C) in each wall-like projection (W) in the longitudinal direction of the wall-like projections (W) are the same as those in a wall-like projection (W) in a next row but one.

Thus, it is preferred that when a cut portion (C) in a wall-like projection (W) is viewed in a direction perpendicular to the longitudinal direction, the cut portion (C) lies substantially at the center of a wall division (Wd) in the longitudinal direction in an adjacent wall-like projection (W), and overlaps a cut portion (C) in a wall-like projection (W) in a next row but one.

When such a resin sheet is used as a unidirectional male hook-and-loop fastener, uniformity of the engagement force can be obtained. When such a resin sheet is used as a filter, a non-uniform flow of a fluid can be very effectively prevented.

With reference to the phrase "extending from the bottom to the top of the wall-like projection (W)" for a cut portion (C), the "bottom of the wall-like projection (W)" does not mean the lowermost portion or the base of the wall-like projection (W) in the strict sense; it may be a portion located somewhat above the lowermost portion of the wall-like projection (W).

"A row of wall divisions (Wd)" herein refers to a row in which the wall divisions (Wd) are arranged in a straight line without a lateral misalignment.

A molded hook-and-loop fastener is known which is produced by a method comprising: producing a tape, including a substrate and a plurality of columns for engaging elements arranged on the substrate, by extrusion molding; making cuts in the columns in a direction intersecting the longitudinal direction of the tape; and stretching the tape in the longitudinal direction to expand the cuts, thereby transforming the columns for engaging elements into rows of engaging elements. In the hook-and-loop fastener obtained by such a method, the engaging elements are arranged in rows in the longitudinal direction of the tape. When the spacing between adjacent columns for engaging elements is narrow, engaging elements appear to be arranged also in a direction intersecting the longitudinal direction of the tape. In the hook-and-loop fastener obtained by such a method, a slight misalignment of the positions of cuts may occur between columns for engaging elements upon the stretching step. However, such misalignment significantly differs from the particular arrangement of the cut portions (C) in the resin sheet of the present invention, in particular the arrangement in which a cut portion (C) in each wall-like projection (W) faces a wall surface of a wall division (Wd) in an adjacent wall-like projection (W). Such misalignment still more differs from the preferable arrangement according to the present invention in which a cut portion (C) faces a portion of a wall division (Wd) in an adjacent wall-like projection (W) in a direction perpendicular to the wall surface of the wall-like projection (W), the portion lying substantially at the center of the wall division (Wd) in the longitudinal direction.

Since the resin sheet of the present invention has such a structure, as described above, when the resin sheet is bent along a direction perpendicular to the longitudinal direction of the wall-like projections (W), not an unnatural sharp bend that may be formed in a portion where wall-like projections (W) have collapsed, but a beautiful natural smooth bend can be obtained.

When the resin sheet of the present invention is used as a directional male hook-and-loop fastener, loop-shaped engaging elements can separately engage projecting portions (P) which are dispersed over the surface of the resin sheet. Further, if a strong force is applied from a loop-shaped engaging element in engagement with a wall division (Wd), or if a high pressure is applied from the top of a wall division (Wd), the force can be dispersed throughout the top of the wall division (Wd). Accordingly, the wall division (Wd) will little break or bend in the longitudinal direction.

When the resin sheet of the present invention is used as a filter, a fluid flows through cut portions (C) and through spaces between parallel wall divisions (Wd) while meeting a resistance and without causing a non-uniform flow or short pass. The filter therefore has an excellent ability to separate fine particles from a fluid.

When the resin sheet of the present invention is used as a display resin sheet, the resin sheet can uniformly transmit light from a backlight and, in addition, can display a bright pattern vividly such that it stands out.

The thickness of the substrate (B) of the resin sheet of the present invention is preferably in the range of 0.1 to 0.3 mm from the viewpoint of easiness of bending, the strength of the resin sheet, etc. When the resin sheet is attached to an object for use with it, irregularities or rib-like protrusions may be provided on the back surface of the substrate (B) in order to enhance the adhesion to the object.

It is essential that at least 10 rows, each consisting of a wall-like projection (W), i.e., wall divisions (Wd) arranged in the longitudinal direction, are present on the surface of the resin sheet of the present invention in order for the resin sheet to perform a function as a directional male hook-and-loop fastener, a function as a filter, or a function as a display resin sheet. The resin sheet is preferably covered with at least 50 rows of wall-like projections (W). More preferably, the entire surface of the resin sheet or the entire resin sheet except its periphery is covered with wall-like projections (W).

The width of the resin sheet in a direction perpendicular to the longitudinal direction of the wall-like projections (W) varies depending on the intended use. When the resin sheet is used as a directional male hook-and-loop fastener or a filter, the width is preferably 1 cm or more, more preferably 2 cm or more. When the resin sheet is used as a display resin sheet, the width varies depending on the particular usage; however, it is preferably 2 cm or more, more preferably 5 cm or more.

It is essential that in the resin sheet of the present invention, the length (Lw) of each wall division (Wd) in the longitudinal direction is longer than the length (Lc), in the longitudinal direction, of each cut portion (C) located at either end of the wall division (Wd) in the longitudinal direction. Preferably, the length (Lw) of each wall division (Wd) in the longitudinal direction is 1.2 to 5 times longer than the length (Lc), in the longitudinal direction, of each cut portion (C) located at either end of the wall division (Wd) in the longitudinal direction.

When the length (Lw) of each wall division (Wd) is longer than the length (Lc) of each cut portion (C), a beautiful smooth bend can be obtained in the longitudinal direction of the wall-like projections (W) as described above. When the resin sheet is used as a directional male hook-and-loop fastener, if a strong force is applied from a loop-shaped engaging element in engagement with a wall division (Wd), or if a high pressure is applied from the top of a wall division (Wd), the wall division (Wd) will little break in the longitudinal direction or in the height direction. When the resin sheet is used as a filter, fine particles can be completely separated from a fluid without causing a non-uniform flow or short pass, and variation in the filter function can be prevented. When the resin sheet is used as a display resin sheet, the presence of cutting portions (C) does not adversely affect a pattern.

The length (Lw) of each wall division (Wd) in the longitudinal direction is preferably 0.8 to 20 mm, more preferably 1 to 15 mm. The length (Lc) of each cut portion (C) in the longitudinal direction and the length (Lw) of each wall division (Wd) in the longitudinal direction herein refer to a length as measured at a level whose height from the base of the wall division (Wd) is 1/3 of the height of the wall division (Wd).

It is essential that in the resin sheet of the present invention, the length (Lw) of each wall division (Wd), sandwiched between cut portions (C), in the longitudinal direction is 2 to 6 times the height (H) of the wall division (Wd).

When the length (Lw) is within the range, a natural smooth bend can be obtained in a direction perpendicular to the longitudinal direction. When the resin sheet is used as a directional male hook-and-loop fastener, the wall divisions (Wd), which serve as male engaging elements, are unlikely to collapse. Further, such wall divisions (Wd) do not provide a stimulus to the skin when it touches the surfaces of the wall divisions (Wd). In addition, the filter is excellent in the engagement force in one direction. When the resin sheet is used as a filter, it is excellent in the strength as a filter or a sheet. Further, the filter can withstand the momentum of a fluid and can produce an appropriate pressure loss in the fluid, resulting in an enhanced effect of removing fine particles. When the resin sheet is used as a display resin sheet, coloring can be performed with a gradation and a clear contrast between a colored area and a non-colored area.

The length (Lw) of each wall division (Wd) in the longitudinal direction is preferably 2.5 to 4.5 times the height (H) of the wall division (Wd). The height (H) of each wall division (Wd) is preferably 0.3 to 5.0 mm, more preferably 0.3 to 3.0 mm, and even more preferably 0.35 to 2.5 mm. The height (H) of a wall division (Wd) herein refers to the height from the base to the top of the wall division (Wd). What is important in the present invention is that almost all the wall divisions (Wd) have the same height (H) and a flat top surface. This produces the following advantageous effects. When the resin sheet is used as a male hook-and-loop fastener, it has an excellent feel and is unlikely to break. When the resin sheet is used as a filter, it does not produce a non-uniform flow. When the resin sheet is used as a display resin sheet, it has the effect of uniformly transmitting light.

In the resin sheet of the present invention, the thickness of each wall division (Wd), i.e., Tw shown in FIG. 3, is preferably 0.1 to 1.0 mm from the viewpoint of engagement force when the resin sheet is used as a directional male hook-and-loop fastener, from the viewpoint of resistance to flow pressure when the resin sheet is used as a filter, and from the viewpoint of subtlety and clearness of color when the resin sheet is used as a display resin sheet. More preferably, the thickness (Tw) is 0.20 to 1.0 mm.

In the resin sheet of the present invention, the distance (D) (D shown in FIG. 3) between two adjacent wall-like projections (W) is preferably 0.5 to 4 times, especially preferably 1 to 3 times the thickness (Tw) of each wall division (Wd) for the same reasons as described above with reference to the thickness (Tw) of each wall division (Wd).

Each wall division (Wd) preferably stands upright on the substrate with the thickness (Tw) constant throughout the entire body from the base to the top from the viewpoint of being capable of obtaining a high engagement force and in terms of the feel in the case of a hook-and-loop fastener, from the viewpoint of a fluid shielding effect in the case of a filter, and because of the fact that in the case of a display resin sheet, when it is viewed from above, a sharp pattern can be displayed with a clear distinction between the tops of wall divisions (Wd) and the other area.

The lower end of each cut portion (C) may reach the substrate surface, or may not reach the substrate surface and may form, on the substrate surface, a rib-like bulge extending in the longitudinal direction from the base of each wall division (Wd).

The shape of each cut portion (C) will now be described with reference to the drawings.

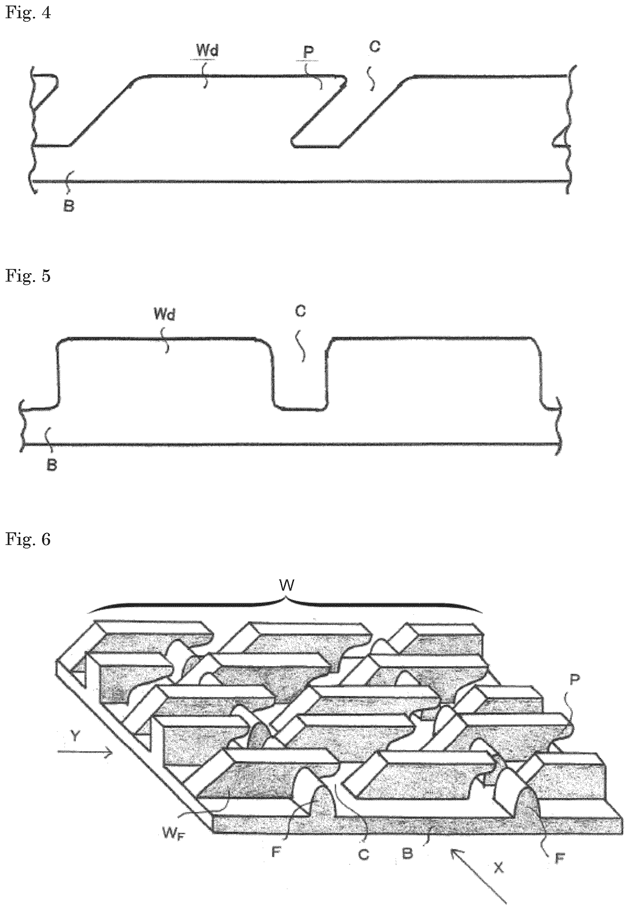

In the resin sheet shown in FIG. 4, each cut portion (C) is formed such that the end surfaces of the cut portion (C) in the longitudinal direction are oblique to the longitudinal direction of the wall divisions (Wd).

In the resin sheet shown in FIG. 5, each cut portion (C) is formed such that the end surfaces of the cut portion (C) in the longitudinal direction stand upright on the surface of the substrate (B).

The cut portions (C) of the present invention may be any of those of FIGS. 1, 4 and 5. In the resin sheet having the cut portions (C) of FIG. 4, the top of each wall division (Wd) projects toward a cut portion (C), forming a projecting portion (P). Therefore, as with the resin sheet shown in FIG. 1, the resin sheet shown in FIG. 4 can be used as a directional male hook-and-loop fastener. When the resin sheet of the present invention is used in applications other than a directional male hook-and-loop fastener, not the cut portions (C) of FIG. 4 but cut portions (C) standing upright on the substrate (B) as shown in FIG. 5 may be employed. The cut portions (C) of FIG. 5 are preferred especially when the resin sheet is used as a filter or a display resin sheet.

The resin sheet of the present invention will now be described in detail with reference to the case of using it as a directional male hook-and-loop fastener.

When the resin sheet is used as a directional male hook-and-loop fastener, it is essential that the resin sheet satisfies the above-described conditions (1) to (5), and that a projecting portion (P) having a shape capable of engaging a loop-shaped engaging element is present on each cut portion (C), i.e., the top of each wall division (Wd) projects toward each cut portion (C), forming a projecting portion (P) which can engage a loop-shaped engaging element.

It is also essential that the resin sheet satisfies the following conditions:
no projecting portion projects toward a cut portion (C) from a wall division (Wd) located adjacent to a projecting portion (P) via the cut portion (C);
there is a gap between the front end of each projecting portion (P) and a wall division (Wd) located adjacent to the projecting portion (P) via a cut portion (C); and
each wall division (Wd) has one projecting portion (P), and in almost all the wall divisions (Wd), the projecting portions (P) project in the same direction.

Such a resin sheet functions as a directional male hook-and-loop fastener, i.e., engages loop-shaped engaging elements only when they approach the male fastener in one direction.

If no projecting portion (P) is present on each cut portion (C) or if there is no gap between the front end of each projecting portion (P) and a wall division (Wd) located adjacent to the projecting portion (P) via a cut portion (C), the resin sheet does not function as a male hook-and-loop fastener because such a wall division (Wd) cannot engage a loop-shaped engaging element. If a projecting portion (P) projects toward a cut portion (C) also from a wall division (Wd) located adjacent to a projecting portion (P) via the cut portion (C), or if each wall division (Wd) has two projecting portions (P) projecting in different directions, or if there are projecting portions (P) projecting in different directions, the resin sheet does not function as a directional male hook-and-loop fastener because the projecting portions (P) engage loop-shaped engaging elements approaching from various directions.

In the resin sheet of the present invention, the projection length (Lp) of each projecting portion (P) is preferably 0.05 to 5.0 mm, more preferably 0.1 to 3.0 mm, and even more preferably 0.15 to 2.5 mm. The projection length (Lp) of each projecting portion (P) is preferably 5 to 30% of the length (Lw) of the wall division (Wd) in the longitudinal direction.

The projection length (Lp) of each projecting portion (P) herein refers to the longest length in the longitudinal direction of the wall divisions (Wd).

In the present invention, the projecting portion (P) may have a shape as shown in FIG. 1: the top of the wall division (Wd) projects toward the cut portion (C). Alternatively, the projecting portion (P) may have a shape as shown in FIG. 4: the cut portion (C) extends from the base in a direction oblique to the longitudinal direction and to the height direction of the wall-like projection (W), so that one end surface of the cut portion (C) is inclined toward the cut portion (C) and the top of the wall division (Wd) projects toward the cut portion (C). It is preferred in terms of effect that the top of each projecting portion (P) is continuous and integrated with the top of the wall division (Wd), and have the same height from the substrate surface and the same thickness (Tw) as the top of the wall division (Wd).

In the case where each projecting portion (P) projects toward a cut portion (C) as shown in FIG. 1, the thickness (length in a direction perpendicular to the substrate surface) of each projecting portion (P) is preferably 10 to 50% of the height of the wall division (Wd). In the case where each cut portion (C) is inclined and the top of the wall division (Wd) projects toward the cut portion (C) as shown in FIG. 4, the longitudinal ends of the cut portion (C) are preferably inclined at 10 to 60°, more preferably at 20 to 40° with respect to a direction perpendicular to the substrate surface from the viewpoint of engagement performance. When the resin sheet of the present invention is used as a directional male hook-and-loop fastener, it is preferred in terms of the feel that the boundary between the top and a wall surface of a wall division (Wd) and the boundary between the top of the wall division (Wd) and a cut portion (C) are not a sharp edge but a gentle curve.

When a resin sheet including wall divisions (Wd), each having one projecting portion (P) which is parallel to the top of the wall division (Wd) and projects in the same direction, is used as a directional male hook-and-loop fastener, the fastener can be firmly attached to an object, faithfully following the surface configuration of the object even when it is intricate.

The projecting portions (P) engage loop-shaped engaging elements only when the elements approaches from the direction in which the projecting portions (P) project, while the loop-shaped engaging elements can be easily disengaged from the projecting portions (P) by moving the elements in the direction in which the projecting portions (P) project. The loop-shaped engaging elements easily engage separately with the projecting portions (P) which are dispersed over the surface of the resin sheet. Since each projecting portion (P) projects from the wall division (Wd) in a direction parallel to the top of the wall division (Wd), the wall division (Wd) will not break in the longitudinal direction of the wall even when a great force is applied from a loop-shaped engaging element. Further, in the resin sheet of the present invention, the projecting portion (P) does not project upward from the top of the wall division (Wd). Therefore, the wall division (Wd) will in no way stimulate the skin when it touches the top of the wall division (Wd). In addition, the engagement force between a loop-shaped engaging element and a projecting portion (P) in the projecting direction is very large.

The resin sheet of the present invention is produced from a common thermoplastic resin. Examples of the resin include polyolefin resins such as polyethylene, polypropylene, and an ethylene-vinyl alcohol copolymer; polyester resins such as polyethylene terephthalate, polybutylene terephthalate, polybutylene succinate, and polylactic acid; thermoplastic non-elastomeric resins including polyamide resins such as nylon 6, nylon 66, and a semi-aromatic polyamide; and thermoplastic elastomeric resins such as a polyolefin elastomer, a polyester elastomer, a polystyrene elastomer, a polyurethane elastomer, a polyamide elastomer, and a soft polyvinyl chloride. These resins may be used singly or in combination.

Among them, a non-elastomeric resin blended with an elastomeric resin, as typified by polypropylene blended with a small amount of a polyolefin elastomer, and an elastomeric resin as typified by a polyester elastomer are preferred because the use of such a resin can provide a resin sheet which is excellent in the flexibility and the feel and a male engaging element that does not break a loop-shaped engaging element as an engaging counterpart after repeated engagement/peeling. An elastomeric resin or a resin blend of a non-elastomeric resin and an elastomeric resin can be inserted into a narrow space without a gap by utilizing the flexibility of the resin, whereby a resin sheet which can easily prevent short pass of a fluid can be obtained. Such a resin is therefore preferably used to produce a resin sheet for use as a filter. In the resin blend of a non-elastomeric resin and an elastomeric resin, the proportion of the elastomeric resin in the resin blend is preferably 3 to 50% by weight.

Among the above resins, a semi-aromatic polyamide, in particular a semi-aromatic polyamide obtained from a mixed diamine of 1,9-nonanediamine and terephthalic acid or a mixed diamine of 1,9-nonanediamine and 2-methyl-1,8-octanediamine, and terephthalic acid as main components, is preferred, and a semi-aromatic polyamide obtained from a mixed diamine of 1,9-nonanediamine and 2-methyl-1,8-octanediamine at a molar ratio of 40:60 to 95:5 and terephthalic acid is more preferred. Such a semi-aromatic polyamide has excellent heat resistance, strength, and moldability, and therefore exhibits excellent performance in applications such as a directional male hook-and-loop fastener which is used at high temperatures and a filter which treats a high-temperature fluid.

A resin composition comprising such a semi-aromatic polyamide and a small amount of an elastomer can also be used to produce the resin sheet of the present invention. The elastomer exhibits rubber-like elasticity and flexibility at around room temperature and can be softened and easily molded at a molding temperature, and may include a styrene elastomer, an olefin elastomer, a urethane elastomer, an ester elastomer, and an amide elastomer. Preferably, the elastomer is a polyolefin elastomer, especially a maleic anhydride-modified polyolefin elastomer, and the semi-aromatic polyamide is a terminal amino group-containing polyamide obtained by using terephthalic acid as a dicarboxylic acid component. The terminal amino group and the functional group based on maleic anhydride react to enhance the integrity of the semi-aromatic polyamide and the elastomer, causing phase separation during molding and reducing the strength. Consequently, the molded product can have such flexibility as to be capable of effectively preventing breakage or cracking of the projecting portions (P).

A resin having excellent transparency is preferably used to produce the resin sheet of the present invention for use as a display resin sheet because light from a backlight and a colored pattern as a display can be displayed vividly. An example of such a resin is an elastomer resin comprising a block copolymers of butyl acrylate and methyl methacrylate. This elastomer resin is also excellent in flexibility; therefore, when a light source has a curved surface or when the display resin sheet has a curved surface, the resin sheet can have a curved surface that faithfully follows the light source, or can have a natural smooth curved surface.

The block copolymer of butyl acrylate and methyl methacrylate preferably has a weight-average molecular weight of 40,000 to 100,000 and a weight ratio between butyl acrylate and methyl methacrylate of 55:45 to 75:25 from the viewpoint of moldability, flexibility and remarkable transparency. The block copolymer may comprise a small amount of a third comonomer component other than butyl acrylate and methyl methacrylate. It is possible to blend block copolymers, each having a weight ratio between the comonomer components which lies outside the above range, to prepare and use a resin blend having a weight ratio between butyl acrylate and methyl methacrylate which falls within the above range.

The block copolymer preferably has a (a2)-(a1)-(a2) structure consisting of one polymer block (a1) composed mainly of butyl acrylate units and two polymer blocks (a2) composed mainly of methyl methacrylate units. The polymer block (a1) constitutes a soft segment component and the polymer block (a2) constitutes a hard segment component. The hard segment component and the soft segment component provide the resin with appropriate flexibility and stretchability in addition to transparency.

The resin sheet of the present invention may optionally contain an additive such as carbon black, titanium oxide, or mica, and other additives such as a colorant, a dye, a flame retardant, an ultraviolet absorber, and an antioxidant. When the resin sheet is used as a display resin sheet, it is required to transmit light from a backlight or the like. Therefore, it is preferred not to use an additive that impairs transparency. When a milky color tone or metallic luster is required, the resin sheet may contain a white pigment or fine particles or flakes having a surface with metallic luster in such an amount as not to impair the transparency of the resin sheet.

As described above, the resin sheet of the present invention may include the shielding elements (F) provided on the substrate surface. Between the adjacent wall-shaped projections (W), the provision of the shielding elements (F), which stand on the substrate and make the pressure loss of a fluid in the longitudinal direction of the wall-like projections (W) 0.7 to 1.3 times, preferably 0.8 to 1.15 times the pressure loss of the fluid in a direction perpendicular to the wall-like projections (W), enables use of the resin sheet of the present invention as a filter that allows a fluid to flow in a direction intersecting the longitudinal direction of the wall-like projections (W), and also as a filter that allows a fluid to flow in a direction parallel to the longitudinal direction of the wall-like projections (W). In either filter, a fluid can be diffused uniformly over the entire sheet. Therefore, the provision of the shielding elements (F) can expand the usage of the resin sheet as a filter.

The provision of the shielding elements (F) makes it possible to diffuse a fluid quickly and uniformly over the entire surface of the resin sheet by allowing the fluid to flow in a direction intersecting or parallel to the longitudinal direction of the wall-like projections (W).

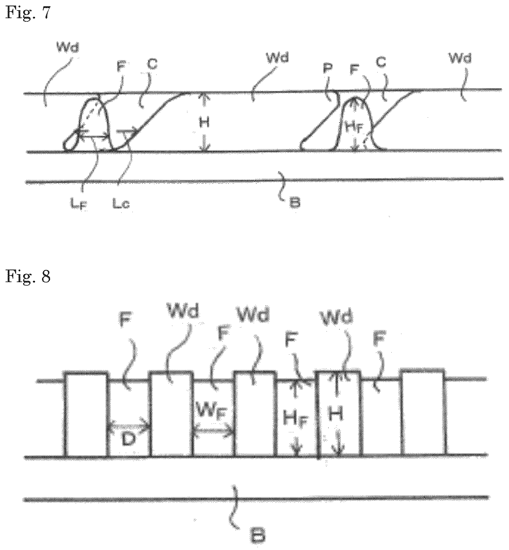

FIGS. 6 through 8 illustrate an example of the shape and the number of the shielding elements (F) according to a preferred embodiment. The height (H_{F}) of each shielding element (F) is preferably 0.8 to 0.98 times, more preferably 0.85 to 0.95 times the height (H) of each wall division (Wd). The length (L_{F}) of each shielding element (F) in the longitudinal direction is preferably 0.3 to 1.0 times, more preferably 0.4 to 0.7 times the length (Lc) of each cut portion (C) in the longitudinal direction. The width (W_{F}) of each shielding element (F) in a direction perpendicular to the longitudinal direction is preferably 0.8 to 1.0 times, more preferably 0.9 to 1.0 times the distance (D) between adjacent wall-like projections (W). The number of the shielding elements (F) is preferably 0.6 to 1.0 times the number of the wall divisions (Wd), and the shielding elements (F) are preferably disposed uniformly between adjacent wall-like projections (W). If the dimensions and the number of the shielding elements (F) fall outside the above ranges, the resin sheet cannot sufficiently shield a fluid or cannot diffuse a fluid uniformly over the entire resin sheet. Each shielding element (F) preferably has a rib-like shape which stands on the substrate surface, extends upward along the wall surface of a wall-like projection (W) without a space between it and the wall surface, decreases its longitudinal thickness in an upward direction, and extends between adjacent wall-like projections (W) in a direction perpendicular to the longitudinal direction.

The length (L_{F}) of each shielding element (F) in the longitudinal direction refers to a length as measured at a level whose height from the base of the shielding element (F) is 1/3 of the height of the shielding element (F).

When the resin sheet of the present invention is used as a filter, it is important that a fluid does not overflow the top surfaces of the wall partitions (Wd). For this purpose, it is necessary that the top surface of each wall division (Wd) is flat and of uniform height, the heights (H) of almost all the wall divisions (Wd) are the same, and the heights (H_{F}) of the shielding elements (F) do not exceed the heights (H) of the wall divisions (Wd). It is not preferred that a shielding element(s) (F), disposed between wall-like projections (W) of the resin sheet, completely blocks an area of a cut portion (C) other than its area lying higher than the top of the shielding element(s) (F). Therefore, if the position of a shielding element (F) overlaps the position of a cut portion (C), it is preferred to select a size, a shape and a base position of the shielding element (F) so that it does not completely block the area of the cut portion (C).

In the present invention, the pressure loss of a fluid refers to a value as measured when water at 25°C is allowed to flow at 0.1 m/sec in a system in which water at 25°C flows only within a structure composed of the wall divisions (Wd) and the shielding elements (F), the tops of the wall divisions (Wd) being completely sealed. When the resin sheet is used as a filter, an appropriate pressure loss value on the surface of the resin sheet varies depending on the particular use intended and the manner of using the filter; however, it is preferably 20 to 150 kPa/10 mm whether a fluid is allowed to flow in a direction intersecting the wall-like projections (W) or in a direction parallel to the wall-like projections (W). The shielding elements (F) are formed simultaneously with the formation of the substrate (B) and the wall divisions (Wd) from the same resin upon molding of the resin sheet.

As described above, the provision of the shielding elements (F) on the surface of the resin sheet enables use of the resin sheet of the present invention not only as a filter that allows a fluid to flow in a direction intersecting the longitudinal direction of the wall-like projections (W), but also as a filter that allows a fluid to flow in a direction parallel to the longitudinal direction of the wall-like projections (W). Thus, the provision of the shielding elements (F) can expand the usage of the resin sheet as a filter.

A method for producing the resin sheet of the present invention will now be described. A preferable method for producing the resin sheet of the present invention comprises: allowing a molten resin to flow in a sheet-like form on the surface of a metal roll having a large number of cavities, each having the same shape as each wall division (Wd), provided in the surface, and forcing the molten resin into the cavities; cooling and solidifying the resin; and then peeling the resin sheet from the surface of the metal roll and, at the same time, pulling the resin sheet out of the cavities to produce a resin sheet having a large number of rows of wall divisions (Wd) on the surface.

In the case of a resin sheet including shielding elements (F), a method is preferably used in which a large number of cavities for shielding elements are additionally provided in the surface of a metal roll so that shielding elements (F) will be formed between rows of wall divisions (Wd). A molten resin is forced into the cavities for shielding elements simultaneously with forcing the molten resin into cavities for wall divisions. After cooling and solidification of the resin, the resin sheet is peeled from the surface of the metal roll and, at the same time, the resin sheet is pulled out of the cavities to produce a resin sheet having a large number rows of wall divisions (Wd) and a large number of shielding elements (F) formed between the rows of wall divisions (Wd).

The production method, which involves pulling a resin sheet out of cavities, will now be described in detail. A metal ring having a thickness of 0.2 to 0.5 mm and having cavities formed in the outer peripheral surface is prepared. The cavities each have the shape of a wall division (Wd) (in the case of a male hook-and-loop fastener, the wall division (Wd) has a projecting portion (P) projecting from the top toward a cut portion (C)). The metal rings and metal rings having no cavities are stacked alternately to prepare a metal roll having a large number of cavities, each having the shape of a wall division, arranged in rows on the outer peripheral surface. The metal rings with the cavities and the metal rings with no cavities may be stacked alternately either in a one-by-one manner or in such a manner that one metal ring with the cavities and a plurality of, e.g. two or three, metal rings with no cavities are stacked alternately.

When shielding elements (F) are provided, metal rings having cavities for shielding elements (F) are used instead of the metal rings having no cavities. The metal rings having cavities for shielding elements (F) are stacked such that the circumferential positions of the cavities are the same in all the metal rings.

A plurality of cavities, each having the shape of a wall division, are arranged on the surface of such a metal roll in a row at regular intervals in the circumferential direction. A plurality of, e.g. at least ten, such rows extending in the circumferential direction are arranged in parallel at regular intervals. It is essential that the positions of the cavities for wall divisions in the circumferential direction differ between two adjacent rows. The metal roll has a constant thickness, and therefore each cavity for a wall division has a constant thickness. Preferably, the width of each cavity for a wall division (the length of a wall division (Wd) in the longitudinal direction) is either the same or gradually and slightly decreases in a direction from the surface of the metal roll toward the front end of the cavity (which becomes the top of a wall division (Wd)) because the wall division (Wd) can be easily pulled out of the cavity. When a space for a projecting portion (P) is provided in each cavity for a wall division, the projecting portion (P) is forcibly pulled out of the cavity. The projecting portion (P) can be pulled out without breakage or cracking by using a flexible resin for the projecting portion or increasing the temperature of the projecting portion when pulling it out.

A method for molding a resin sheet by flowing a molten resin on the surface of the metal roll will now be described. A molten resin is extruded into the gap between the metal roll and a drum roll located opposite the metal roll and is pressurized to fill the molten resin into the cavities for wall divisions in the surface of the metal roll (also into the cavities for shielding elements, if present) and, at the same time, form a sheet having a uniform thickness on the surface of the metal roll. While the metal roll is rotating, a refrigerant is allowed to circulate continually within the metal roll to cool and solidify the molten resin in the cavities. At the same time, the sheet on the surface of the metal roll is cooled while stretching it by means of nip rollers whose gap has been adjusted so that the substrate (B) of the resulting resin sheet will have a uniform thickness. Subsequently, the cooled sheet is peeled from the surface of the metal roll and, at the same time, the wall divisions (Wd) and the shielding elements (F) are pulled out of the cavities. A resin sheet having a large number of the wall divisions (Wd) and optionally having a large number of the shielding elements (F) is thus obtained.

A directional male hook-and-loop fastener and a filter display resin sheet, which are applications of the thus-obtained resin sheet, will now be described.

For a directional male hook-and-loop fastener, as described above, it is necessary that each projecting portion (P) projects from the top of a wall division (Wd) in a direction toward a cut portion (C) in order to obtain an engagement ability. It is also necessary in terms of the feel and texture that each projecting portion (P) does not project upward from the top of a wall division (Wd). Each wall division (Wd) has one projecting portion (P). A wall division having two projecting portions (P) projecting in opposite directions from the ends of the top, for example, is undesirable from the viewpoint of production and performance because when the wall division is pulled out of a cavity in the above-described production process, at least one of the projecting portions (P) will be often torn.

By replacing half of metal rings having cavities in which spaces for projecting portions (P) project in the same direction with metal rings having cavities in which spaces for projecting portions (P) project in the opposite direction, a male hook-and-loop fastener is obtained which can engage loop-shaped engaging elements not in one direction but in two directions.

Loop hook-and-loop fasteners, which serve as an engaging counterpart of such a male hook-and-loop fastener, include a woven loop hook-and-loop fastener having a large number of loop-shaped engaging elements on the surface of a common woven fabric, a knitted or non-woven hook-and-loop fastener in which fibers are raised in a loop shape on the surface of a knitted or non-woven fabric, and a non-woven hook-and-loop fastener in which a fiber web is heat-sealed in places, and which uses non-heat-sealed portions as loop-shaped engaging elements. A loop hook-and-loop fastener in which the surface of a knitted is raised and fibers are pulled out from the knitted in a loop shape.

When the resin sheet of the present invention is used as a directional male hook-and-loop fastener, the male hook-and-loop fastener needs to be mounted to an object in a predetermined direction so that the projecting portions (P) of the resin sheet will be caught by loop-shaped engaging elements. The resin sheet may be mounted to an object by known methods, for example by sewing, by the use of an adhesive or glue, or by the use of a molten resin. Manners of using the resin sheet of the present invention include a manner in which the resin sheet is mounted to a wall surface, a pillar, or the like, and an article having loop-shaped fibers on the surface is attached to the resin sheet, a manner in which the resin sheet is used as a cuff of a blood pressure monitor, a manner in which the resin sheet is used as a tightening member for tightening an upper of a shoe or a wrist of a glove, and a fastener for a medial supporter or a brassiere. The surface of the resin sheet may be covered e.g. with a resin with a width of 5 to 20 mm in a direction intersecting the wall division (Wd) to form non-engageable portions arranged at regular intervals in the longitudinal direction of the wall-like projections (W). Such a resin sheet can be used as a multistage fastener whose engaging position can be changed according to the shape of the user, etc.

The resin sheet of the present invention will now be described with reference to the case of using it as a filter. When a gas containing fine particles enters or exits a gap in a machine, it is conventional practice to insert a fiber fabric such as a non-woven fabric into the gap to prevent the fine particles from leaking out of or entering the machine. In the case of a fiber fabric, fine particles, deposited on and adhering to the surfaces of fibers, are likely to cause clogging of the fiber fabric. The clogged fiber fabric will be pressed by the gas and become dense, which further causes clogging. This may result in the loss of the filtering ability of the fiber fabric, i.e., the fiber fabric being incapable of passing therethrough of the gas.

In a filter using the resin sheet of the present invention, a gas containing fine particles is allowed to flow on the surface of the resin sheet in a direction perpendicular to the longitudinal direction of the wall-like projections (W) to separate the fine particles from the gas. As described above, a gas containing fine particles enters a cut portion (C) of a wall-like projection (W) and hits the wall surface of the wall division (Wd) of the next wall-like projection (W), whereby the flow speed of the gas is reduced and a gas containing fine particle is separated into two oppositely-directed flows. Each gas flow containing fine particles enters a cut portion (C) on one end of the wall division (Wd), and hits the wall surface of the next wall division (Wd), whereby the flow speed of the gas is reduced. When the gas repeats such a movement, the fine particles are separated from the gas, and fall onto and adhere to the wall surfaces of wall divisions (Wd), cut portions (C), and the surface of the substrate (B) of the resin sheet. The resin sheet thus functions as a filter. Unlike the conventional fiber fabric, the resin sheet of the present invention is free from compression due to clogging and the attendant loss of the filtering ability. Besides a filter for a gas containing fine particles as described above, the resin sheet of the present invention can also be used as a filter for a liquid containing fine particles.

As described above, the provision of the shielding elements (F) on the surface of the resin sheet of the present invention enables use of the resin sheet as a filter that allows a fluid to flow in a direction intersecting the longitudinal direction of the wall-like projections (W), and as a filter that allows a fluid to flow in a direction parallel to the longitudinal direction of the wall-like projections (W). In either filter, a fluid can be diffused uniformly over the entire resin sheet. Therefore, the provision of the shielding elements (F) can expand the usage of the resin sheet as a filter. Thus, the present invention also provides a method for diffusing a fluid on the surface of the resin sheet, comprising allowing the fluid to flow through a filter comprising the resin sheet having the shielding elements (F), wherein the fluid is allowed to flow in a direction intersecting the longitudinal direction of the wall-like projections or in a direction parallel to the longitudinal direction of the wall-like projections.

Methods for inserting the resin sheet of the present invention into a gap include a method in which the resin sheet is used either as a single sheet or as a stack of two or more and a method in which the resin sheet is used in the form of a roll or a flat roll. Such a method is appropriately selected depending on the shape of the gap. When a stack of the resin sheets is used or when the resin sheet is used in the form of a roll or a flat roll, it is preferred to fix the roll or the stack by providing a glue layer, an adhesive layer, a molten resin layer, or the like on the back surface(s) of the resin sheet(s). The resin sheet can be secured to an object by attaching the back surface of the resin sheet to the object with an adhesive, a glue or a molten resin. The tops of the wall divisions (Wd) on the surface of the resin sheet of the present invention may be covered with a film or sheet without a gap, with the surface of the film or sheet, in contact with the tops of the wall divisions (Wd), being covered with an adhesive. This enables fine particles to be adsorbed to the adhesive and can prevent a non-uniform flow or short-pass of a gas or a liquid, i.e., prevent the gas or the liquid from overflowing the tops of the wall divisions (Wd).

Examples of filters using the resin sheet of the present invention include, besides a filter for removing fine particles from a fine particle-containing gas entering or exiting a gap in a machine, a filter for preventing entry of fine particles from the outside, a filter for preventing diffusion of fine particles to the outside, and a fine particle removal filter for a fine particle-containing liquid.

The resin sheet of the present invention will now be described with reference to the case of using it as a display resin sheet. Preferable display resin sheets include a display resin sheet of a transparent resin which is colored only in the tops of wall divisions (Wd), and a display resin sheet of a transparent resin which is colored only in the area other than the tops of wall divisions (Wd). A roller may be used to color only the tops of wall divisions (Wd). To color only the area other than the tops of wall divisions (Wd), a method may be used which involves first coloring the entire surface, and then scraping off or wiping off a paint or the like adhering to the tops of the wall divisions (Wd).

It is only necessary for the transparent resin to have such transparency as to ensure transmission of light. For applications which require high transparency, the above-described block copolymer of butyl acrylate and methyl methacrylate is suited. When a milky or other color tone is required, a coloring agent such as a white pigment or dye may be added to the resin in such an amount as not to significantly impair the transparency of the resin sheet, or a light transmissive resin sheet which is colored to the intended color may be bonded to the back surface of the resin sheet.

When the resin sheet is patterned by thus coloring only the tops of wall divisions (Wd) or coloring only the area other than the tops of wall divisions (Wd), a display resin sheet is obtained which can beautifully display the pattern by applying light to the back surface. In conventional display resin sheets, light from a backlight little passes through a patterned portion, and therefore the pattern tends to look dark. In the case of the resin sheet of the present invention, small resin portions, which are not colored and excellent in the transparency, are dispersed and exposed in a patterned area. Light from a backlight passes through the small portions, so that a vivid pattern with excellent brightness can be obtained.

Since the wall divisions (Wd) and the cut portions (C) are present alternately, and the longitudinal positions of wall divisions (Wd) and cut portions (C) differ between adjacent two wall-like projections (W), the resin sheet can easily produce a gradational change of color, enabling real natural patterning. Furthermore, when the resin sheet is bent along a direction perpendicular to the longitudinal direction of the wall-like projections (W), not a sharp but a beautiful natural smooth bend can be easily obtained. Therefore, even when a light source has a curved surface or when a display resin sheet has a curved surface, a beautiful natural smooth bend can be obtained without a local sharp bend, and the resin sheet can be brought into contact with the light source or the curved surface. A display resin sheet, comprising the resin sheet of the present invention, can be used as a substitute for an advertising sign, as a cover for a lighting fixture, as a decoration for window glass, or as a toy.

As described above, when the resin sheet of the present invention is formed of a transparent resin, and is patterned by coloring only the tops of wall divisions (Wd) or coloring only the area other than the tops of wall divisions (Wd), the resin sheet can be used as a display resin sheet which, when light is applied to the back surface, can display the pattern beautifully and brightly. Since small portions of the transparent resin are dispersed and exposed in a colored portion, light from a backlight passes through and illuminates the colored portion. In conventional display resin sheets, a colored portion does not transmit light from a backlight, and therefore looks dark. Such a conventional display sheet can only be tinted in order to transmit light from a backlight. The display resin sheet according to the present invention can significantly improve the drawback of the conventional display sheets and display a vivid pattern with a bright colored portion.

Since the wall divisions (Wd) and the cut portions (C) are present alternately, and the longitudinal positions of wall divisions (Wd) and cut portions (C) differ between adjacent wall-like projections (W), the resin sheet can easily produce a gradation of color, enabling more real and subtle patterning. Furthermore, not a sharp but a beautiful natural smooth bend can be easily obtained along a direction perpendicular to the longitudinal direction of the wall-like projections (W). Therefore, even when a light source has a curved surface or when a display face has a curved surface, a beautiful natural smooth bend can be obtained without a local sharp bend, and the resin sheet can be brought into contact with the light source or the curved surface.

While the resin sheet of the present invention has been described with reference to the cases of using it as a directional male hook-and-loop fastener, as a filter and as a display resin sheet, it should be noted that the resin sheet of the present invention is not limited to such applications but can be used in various other applications.

The following examples illustrate the present invention. In the examples, a knitted loop hook-and-loop fastener (MAGIC TAPE (registered trademark) E50000), manufactured by Kuraray Fastening Co., Ltd. was used as a loop counterpart to be engaged with a directional male hook-and-loop fastener, and engagement/peeling was repeated 2000 times. The male fastener was observed under magnification using a microscope to check if projection portions, etc. were broken and if cracks were formed.

### Example 1

### Preparation of Molding Die

A metal ring having a thickness of 0.20 mm and a diameter of 212 mm and having cavities for wall divisions (Wd), each having a projecting portion (P), on the outer peripheral surface, and a metal ring having a thickness of 0.25 mm and a diameter of 212 mm and having a flat outer peripheral surface with no cavities were stacked alternately to prepare a metal roll having a width of 120 mm and having a large number of cavities for wall divisions with a projecting portion.

### Production of Resin Sheet

A melt of polypropylene containing 8% by weight of a polyolefin elastomer was extruded into the gap between the metal roll and a drum roll located opposite the metal roll, and was pressurized to fill the resin into the cavities. At the same time, a sheet having a uniform thickness was formed on the surface of the metal roll. While rotating the metal roll, the resin in the cavities was cooled with water which was continually circulating within the roll and, at the same time, the sheet was stretched by means of nip rollers whose gap had been adjusted so that the substrate (B) of the resulting resin sheet would have a thickness of 0.20 mm. The cooled and solidified sheet was then peeled from the surface of the metal roll to produce a resin sheet having a large number of rows of wall divisions (Wd), arranged in parallel on the surface.

### Shape of the Resin Sheet Obtained

The resin sheet obtained had a shape as shown in FIG. 1. In particular, wall-like projections (W) having a height of 0.45 mm, standing upright on the surface of a substrate (B) having a thickness of 0.20 mm, were arranged on the substrate surface in 200 parallel rows with a spacing of 0.25 mm. Each wall-like projection (W) had a large number of cut portions (C), penetrating the wall of the wall-like projection (W) in the thickness direction and extending from the bottom to the top of the wall-like projection (W), disposed at regular intervals. The wall-like projection (W) was divided by the cut portions (C) into a large number of wall divisions (Wd). Each wall division (Wd) had a uniform thickness (0.20 mm) throughout the entire body from the base to the top, and had no projecting portion projecting from its wall surface in a direction intersecting the longitudinal direction of the wall-like projection (W). The top of each wall division (Wd) was flat, with no projecting portion projecting upward from the top. A wall surface of a wall division (Wd) was present at a position in a wall-like projection (W) which faced a cut portion (C) in an adjacent wall-like projection (W) in a direction perpendicular to the wall surface of the wall-like projection (W), and the cut portion (C) faced a portion lying substantially at the center of the wall division (Wd) in the longitudinal direction in the adjacent wall-like projection (W). The length (Lw) of each wall division (Wd) in the longitudinal direction of the wall-like projection (W) was 1.30 mm, the length (Lc) of each cut portion (C), located at either end of the wall division (Wd), in the longitudinal direction of the wall-like projection (W) was 0.50 mm, and the height (H) of each wall division (Wd) was 0.45 mm.

A projecting portion (P), whose top projects 0.15 mm (Lp = 0.15 mm) toward a cut portion (C), was formed at one end of each wall division (Wd) in the longitudinal direction, whereas no projecting portion projecting toward a cut portion (C) was present at the other end of the wall division (Wd). Between the front end of each projecting portion (P) and a wall division (Wd) located adjacent to the projecting portion (P) via a cut portion (C), there was a gap with a length of 0.25 mm which was wide enough to permit passage therethrough of a loop fiber as a loop-shaped engaging element. Each wall division (Wd) had one projecting portion (P). The projecting portions (P) of all the wall divisions (Wd) projected in the same direction.

### Performance of Directional Male Hook-And-Loop Fastener

Using the resin sheet as a directional male hook-and-loop fastener, a loop hook-and-loop fastener was engaged with it from the projection direction of the projecting portions (P), and strongly pulled in the direction opposite to the projection direction of the projecting portions (P), and then the fasteners were disengaged. After repeating the above operation 2000 times, the state of the projecting portions (P) was observed with a microscope. No projecting portion (P) that was cut, bent, cracked, or whitened due to bending was found. When the surface of the resin sheet was touched with the hand, the presence of the projecting portions (P) was not felt at all. When the resin sheet was bent along a direction perpendicular to the longitudinal direction of the wall-like projections (W), it was able to be bent without a considerable resistance and with a smooth curved surface.

### Performance of Filter

Three resin sheets (20 mm × 20 mm) were stacked via a double-sided adhesive tape. Since the tops of the wall divisions (Wd) were flat, no gap was formed between the tops of the wall divisions (Wd) and the adhesive tape. A substantially square hole of 5 mm × 5 mm was made in the center of the stack of resin sheets. The stack of resin sheets was sandwiched between steel plates having an air supply opening (round hole) through which an air pressure can be applied on the hole of the resin sheet, thereby sealing the tops of the wall divisions (Wd) so that a fluid could flow in and out only from the sides of the resin sheet. 0.1 g of carbon black (particle diameter: 5 to 15 pm) was placed in the substantially square hole, and air pressures at 10 kPa, 20 kPa, and 30 kPa were applied from the air supply opening of the steel plate toward the center of the substantially square hole. Air was allowed to flow such that the amount of leakage was 0.3 L/min, 0.7 L/min and 1.0 L/min when the applied air pressure was 10 kPa, 20 kPa and 30 kPa, respectively. Air flowed through cut portions (C) and between wall divisions (Wd) of adjacent wall-shaped projections (W) in the resin sheet without short pass or a non-uniform flow. Consequently, the fine particles were separated from the air flow in the resin sheet while the air passed through the resin sheet, the air discharged from the resin sheet contained no fine particles, and no clogging of the resin sheet occurred. The filter using the resin sheet was able to be inserted into a gap, and was able to be attached to the curved surface of a small-diameter cylinder without a gap.

### Example 2

A resin sheet having a large number of rows of wall divisions (Wd), arranged in parallel on the surface of a substrate, was produced in the same manner as in Example 1 except that the resin used for molding the resin sheet was changed to a block copolymer of butyl acrylate and methyl methacrylate (KURARITY (registered trademark) LM4285, manufactured by Kuraray Co., Ltd.). The thickness of the substrate (B), the shape and size of each wall division (Wd) and the shape and size of each projecting portion (P) of the resin sheet were the same as those of the resin sheet of Example 1. A display resin sheet was produced using the resin sheet.

In particular, a picture of a rose was drawn on the resin sheet using a paint roll in such a manner that only the tops of wall divisions (Wd) of the resin sheet were colored with a paint.

Rose petals were able to be drawn vividly with increasing color density from white to pink, and a background was also able to be drawn in the same way. When the resin sheet coated with this pattern was used as a cover for a lamp, the colored tops of wall divisions (Wd) were finely and uniformly dispersed and, by transmitted light from the other remarkably transparent area, the rose pattern was displayed brightly, clearly and vividly such that it stood out. When fixing the resin sheet as a cover for the lamp, the resin sheet was able to be smoothly bent and fixed along a thick wire.

### Example 3

A resin sheet having a large number of rows of wall divisions (Wd), arranged in parallel on the surface of a substrate, was produced in the same manner as in Example 1 except that the resin used for molding the resin sheet was changed to a resin obtained by mixing a terminal amino group-containing semi-aromatic polyamide (semi-aromatic polyamide GENESTAR (registered trademark), manufactured by Kuraray Co., Ltd., [η] = 1.20 dl/g) and a maleic anhydride-modified polyolefin elastomer (TAFMER, manufactured by Mitsui Chemicals, Inc.) in an amount of 10% by weight based on the amount of the semi-aromatic polyamide, and pelletizing the mixture. The semi-aromatic polyamide was a product obtained by using a mixed diamine, consisting of 50 mol % of 1,9-nonanediamine and 50 mol % of 2-methyl-1,8-octanediamine, as a diamine component and terephthalic acid as an aromatic dicarboxylic acid component. The thickness of the substrate (B), the shape and size of each wall division (Wd) and the shape and size of each projecting portion (P) of the resin sheet were the same as those of the resin sheet of Example 1.

The resin sheet obtained was used as a directional male hook-and-loop fastener as in Example 1. After the engagement/peeling operation was repeated 500 times, no projecting portion (P) that was cut, bent, or cracked was found. When the surface of the resin sheet was touched with the hand, the presence of the projecting portions (P) was not felt at all. The directional male hook-and-loop fastener exhibited no reduction in the engagement force even under the high temperature condition of 200°C, indicating that the fastener had excellent heat resistance. When the resin sheet was bent along a direction perpendicular to the longitudinal direction of the wall-like projections (W), it was able to be bent without a considerable resistance and with a smooth curved surface.

When the resin sheet was used as a filter as in Example 1, no gap was formed between the tops of the wall divisions (Wd) and the adhesive tape. When air containing fine particles was allowed to flow in a direction perpendicular to the longitudinal direction of the wall-like projections (W), the flow of air passed through a space between each cut portion (C) and a wall division (Wd) of an adjacent row, and no short pass or a non-uniform flow occurred. The fine particles were separated from the air in the resin sheet; the air discharged from the resin sheet contained no fine particles. There was no reduction in the filtering effect or deterioration of the filter even when the temperature of the air was as high as 100°C. The filter using the resin sheet was able to be mounted in a round shape to a small-diameter cylindrical object without a gap.

### Comparative Example 1

A resin sheet was produced in the same manner as in Example 1 except that the positions of the cavities of the metal rings were adjusted so that each cut portion (C) in each wall-like projection (W) faced a cut portion (C) in an adjacent wall-like projection (W) in a direction perpendicular to the longitudinal direction of the wall-like projections (W).

When the resin sheet obtained was used as a directional male hook-and-loop fastener, the fastener was inferior in the engagement force and in the uniformity of the engagement force to the fastener of Example 1. Compared to the fastener of Example 1, more loop fibers were cut in a loop hook-and-loop fastener as an engaging counterpart upon a repetition of engagement/peeling. When the resin sheet is bent along a direction perpendicular to the wall surfaces of the wall-like projections (W), the resin sheet was bent sharply; no beautiful bend was obtained. When the resin sheet was used as a filter as in Example 1, air passed solely through the cut portions (C); therefore, the resin sheet had no appreciable filtering effect of separating fine particles from air.

### Comparative Example 2

A resin sheet was produced in the same manner as in Example 1 except that the shape of each cavity of the metal rings was changed so that the length (Lw) of each wall division (Wd) in the longitudinal direction became equal (0.50 mm) to the length (Lc) of each cut portion (C) in the longitudinal direction.

When the resin sheet obtained was used as a directional male hook-and-loop fastener, some wall divisions (Wd) were cracked or whitened upon a repetition of engagement/peeling, and a few wall divisions (Wd) were broken after the number of repetitions exceeded 400. When the resin sheet was used as a filter as in Example 1, air passed mainly through the cut portions (C). The filtering effect of separating fine particles from air was slightly superior to that of the resin sheet of Comparative Example 1, but far inferior to that of the resin sheet of Example 1.

### Examples 4 and 5, and Comparative Examples 3 and 4

In Example 1, the circumferential length of each cavity for a wall division (Wd) was changed as follows. The length (Lw) of each wall division (Wd) in the longitudinal direction was changed such that it was 1 time (Comparative Example 3), 2.3 times (Example 4), 5 times (Example 5), and 9.5 times (Comparative Example 4) the height (H) of the wall division (Wd). Four types of resin sheets were produced otherwise in the same manner as in Example 1. The density of the engaging elements was 233/cm² in Comparative Example 3, 144/cm² in Example 4, 80/cm² in Example 5, and 46/cm² in Comparative Example 4.

Each of the four types of resin sheets obtained was used as a directional male hook-and-loop fastener. In the sheet of Comparative Example 3, as in the sheet of Comparative Example 2, some wall divisions (Wd) were cracked upon a repetition of engagement/peeling, and some wall divisions (Wd) were broken upon a further repetition of engagement/peeling. The sheet of Comparative Example 4 had a low engagement force which was insufficient for a male hook-and-loop fastener. In contrast, the resin sheets of Examples 4 and 5 were free of a defect that was problematic for a directional male hook-and-loop fastener.

Further, each of the four types of resin sheets obtained was used as a filter. In the sheet of Comparative Example 3, as in the sheet of Comparative Example 1, air easily passed through the cut portions (C); therefore, the resin sheet had no appreciable filtering effect of separating fine particles from air. In the sheet of Comparative Example 4, the resistance was too high and the pressure loss was too large for use of the sheet as a filter.

On the other hand, the resin sheets of Examples 4 and 5 exhibited an excellent fine particle separation ability with an appropriate resistance and no clogging, and therefore were usable as a filter.

### Example 6

A resin sheet was produced in the same manner as in Example 1 except that as shown in FIG. 4, each cut portion (C) was formed by inclined surfaces which were inclined at 45 degrees with respect to the height direction of the wall divisions (Wd), and one of the inclined surfaces formed a projecting portion (P), and that the height (H) of each wall division (Wd) was made 1.2 times that of the resin sheet of Example 1.

While the resin sheet obtained had the drawback of engaged loop-shaped engaging elements easily coming off as compared to the resin sheet of Example 1, it had an engagement ability as a directional male hook-and-loop fastener. When the resin sheet was checked for its performance as a filter in the same manner as in Example 1, the resin sheet exhibited the same excellent performance as the resin sheet of Example 1.

### Example 7

A resin sheet was produced in the same manner as in Example 1 except that as shown in FIG. 5, cut portions (C) were formed parallel to the height direction of the wall divisions (Wd) such that each cut portion (C) had a rectangular cross-sectional shape, and that the resin used for molding was changed to the block copolymer of butyl acrylate and methyl methacrylate used in Example 2.

The resin sheet obtained was colored and patterned in the same manner as in Example 2 and used as a cover for a lamp. As in Example 2, the colored fine tops of the wall divisions were dispersed uniformly and, by illumination with transmitted light from the other remarkably transparent area, the rose pattern was displayed brightly and vividly such that it stood out. When fixing the resin sheet as a cover for the lamp, the resin sheet was able to be smoothly bent along a thick fixing wire.

### Example 8

### Preparation of Molding Die

A metal ring having a thickness of 0.20 mm and a diameter of 212 mm and having cavities for wall divisions (Wd), each having a projecting portion (P), on the outer peripheral surface, and a metal ring having a thickness of 0.50 mm and a diameter of 212 mm and having cavities for shielding elements (F) on the outer peripheral surface were stacked alternately to prepare a metal roll having a width of 120 mm and having a large number of cavities for wall divisions with a projecting portion and a large number of cavities for shielding elements as in Example 1.

### Production of Resin Sheet

A melt of the same elastomer-containing semi-aromatic polyamide as used in Example 3 was extruded into the gap between the metal roll and a drum roll located opposite the metal roll, and was pressurized to fill the resin into the cavities. At the same time, a sheet having a uniform thickness was formed on the surface of the metal roll. While rotating the metal roll, the resin in the cavities was cooled with water which was continually circulating within the roll and, at the same time, the sheet was stretched by means of nip rollers whose gap had been adjusted so that the substrate (B) of the resulting resin sheet would have a thickness of 0.20 mm. The cooled and solidified sheet was then peeled from the surface of the metal roll to produce a resin sheet having, on the surface, a large number of rows of wall divisions (Wd), arranged in parallel, and having sealing elements (F) disposed between adjacent rows of wall divisions (Wd) and arranged at regular intervals.

### Shape of the Resin Sheet Obtained

The resin sheet obtained had a shape as shown in FIG. 6. In particular, wall-like projections (W) having a height of 0.45 mm, standing upright on the surface of a substrate (B) having a thickness of 0.20 mm, were arranged on the substrate surface in 100 parallel rows with a spacing of 0.50 mm. Each wall-like projection (W) had a large number of cut portions (C), penetrating the wall of the wall-like projection (W) in the thickness direction and extending from the bottom to the top of the wall-like projection (W), disposed at regular intervals. The wall-like projection (W) was divided by the cut portions (C) into a large number of wall divisions (Wd). Each wall division (Wd) had a uniform thickness (0.20 mm) throughout the entire body from the base to the top, and had no projecting portion projecting from its wall surface in a direction intersecting the longitudinal direction of the wall-like projection (W). The top of each wall division (Wd) was flat, with no projecting portion projecting upward from the top. A wall surface of a wall division (Wd) was present at a position in a wall-like projection (W) which faced a cut portion (C) in an adjacent wall-like projection (W) in a direction perpendicular to the wall surface of the wall-like projection (W), and the cut portion (C) faced a portion lying substantially at the center of the wall division (Wd) in the longitudinal direction in the adjacent wall-like projection (W). The length (Lw) of each wall division (Wd) in the longitudinal direction of the wall-like projection (W) was 1.30 mm, the length (Lc) of each cut portion (C), located at either end of the wall division (Wd), in the longitudinal direction of the wall-like projection (W) was 0.50 mm, and the height (H) of each wall division (Wd) was 0.45 mm.

A projecting portion (P), whose top projects 0.15 mm toward a cut portion (C), was formed at one end of each wall division (Wd) in the longitudinal direction, whereas no projecting portion projecting toward a cut portion (C) was present at the other end of the wall division (Wd). There was a 0.25-mm gap between the front end of each projecting portion (P) and a wall division (Wd) located adjacent to the projecting portion (P) via a cut portion (C). Each wall division (Wd) had one projecting portion (P). The projecting portions (P) of all the wall divisions (Wd) projected in the same direction.

As shown in FIG. 6, shielding elements (F), the number of which was 0.9 times the number of the wall divisions (Wd), were disposed evenly between adjacent wall-like projections(W). The height (H_{F}) of each shielding element (F) was 0.40 mm, the length (L_{F}) in the longitudinal direction was 0.40 mm, and the width (W_{F}) was equal to the distance between adjacent wall-like projections(W). Each shielding element (F) had a rib-like shape which stands on the substrate (B), extends upward along the wall surface of a wall-like projection (W) without a space between it and the wall surface, decreases the longitudinal length (L_{F}) in an upward direction, and extends between adjacent wall-like projections (W) in a direction perpendicular to the longitudinal direction.

### Pressure Loss in Resin Sheet

A film was bonded to the surface of the resin sheet such that no gap was formed between the tops of the wall divisions (Wd) and the film covering the tops. Water at 25°C was allowed to flow in a direction perpendicular to the wall-like projections (W) and in a direction parallel to the wall-like projections (W), and the pressure loss of the fluid in the perpendicular direction and that in the parallel directions were measured. The pressure loss was 97 kPa/10 mm for the fluid flowing in a direction perpendicular to the wall-like projections (W), and 88 kPa/10 mm for the fluid flowing in the direction parallel to the wall-like projections (W). On the other hand, in a resin sheet having the same construction except for having no shielding elements (F), the pressure loss was 85 kPa/10 mm for the fluid flowing in a direction perpendicular to the wall-like projections (W), and 7.5 kPa/10 mm for the fluid flowing in the direction parallel to the wall-like projections (W).

### Performance of Filter

A substantially square hole of 5 mm × 5 mm was made in the center of the resin sheet (20 mm × 20 mm). The resin sheet was sandwiched between steel plates having an air supply opening (round hole) through which an air pressure can be applied on the hole of the resin sheet, thereby sealing the tops of the wall divisions (Wd) so that a fluid could flow in and out only from the sides of the resin sheet. 0.1 g of carbon black (particle diameter: 5 to 15 pm) was placed in the substantially square hole, and air pressures at 10 kPa, 20 kPa, and 30 kPa were applied from the air supply opening of the steel plate toward the center of the substantially square hole. Air was allowed to flow such that the amount of leakage was 0.3 L/min, 0.7 L/min and 1.0 L/min when the applied air pressure was 10 kPa, 20 kPa and 30 kPa, respectively. In either case, air flowed through cut portions (C) and between wall divisions (Wd) of adjacent wall-shaped projections (W), and passed over shielding elements (F) in the resin sheet without short pass or a non-uniform flow. Consequently, the fine particles contained were separated from the air flow in the resin sheet while the air passed through the resin sheet, the air discharged from the resin sheet contained no fine particles, and no clogging of the resin sheet occurred. The filter using the resin sheet was able to be inserted into a gap, and was able to be attached to the curved surface of a small-diameter cylinder without a gap. The experimental results thus indicate that the resin sheet is useful as a filter that can be used by allowing a fluid to flow not only in a direction perpendicular to the wall-shaped projections (W) but also in a direction parallel to the wall-shaped projections (W).

### Example 9

A resin sheet was produced in the same manner as in Example 8 except that the shape of each cut portion (C) was changed to the shape shown in FIG. 5.

In the resin sheet obtained, the length (Lw) of each wall division (Wd) in the longitudinal direction was 1.30 mm, and the length (Lc) of each cut portion (C) in the longitudinal direction was 0.50 mm. Shielding elements (F) having the same shape as that of Example 8 were disposed at the same density as in Example 8.

In the resin sheet obtained, as in Example 8, water was allowed to flow in a direction perpendicular to the wall-like projections (W) and in a direction parallel to the wall-like projections (W), and the pressure losses of the fluid in the respective directions were measured. The pressure loss was 94 kPa/10 mm for the fluid flowing in a direction perpendicular to the wall-like projections (W), and 82 kPa/10 mm for the fluid flowing in the direction parallel to the wall-like projections (W).

A substantially square hole of 5 mm × 5 mm was made in the center of the resin sheet (20 mm × 20 mm). The resin sheet was sandwiched between steel plates having an air supply opening (round hole) through which an air pressure can be applied on the hole of the resin sheet, thereby sealing the tops of the wall divisions (Wd) so that a fluid could flow in and out only from the sides of the resin sheet. 0.1 g of carbon black (particle diameter: 5 to 15 pm) was placed in the substantially square hole, and air pressures at 10 kPa, 20 kPa, and 30 kPa were applied from the air supply opening of the steel plate toward the center of the substantially square hole. Air was allowed to flow such that the amount of leakage was 0.3 L/min, 0.7 L/min and 1.0 L/min when the applied air pressure was 10 kPa, 20 kPa and 30 kPa, respectively. In any flow direction, air flowed without short pass or a non-uniform flow as in Example 8. The fine carbon black particles were separated from the air flow in the resin sheet, the air discharged from the resin sheet contained no fine particles, and no clogging of the resin sheet occurred. The experimental results thus indicate that the resin sheet is useful as a filter that can be used by allowing a fluid to flow not only in a direction perpendicular to the wall-shaped projections (W) but also in a direction parallel to the wall-shaped projections (W). As with the resin sheet of Example 8, the filter using the resin sheet of Example 9 was able to be inserted into a gap, and was able to be attached to the curved surface of a small-diameter cylinder without a gap.

### Example 10

A resin sheet was produced in the same manner as in Example 8 except that no shielding elements (F) were provided. In the resin sheet obtained, water was allowed to flow in a direction perpendicular to the wall-like projections (W) and in a direction parallel to the wall-like projections (W), and the pressure losses of the fluid in the respective directions were measured. The pressure loss was 80 kPa/10 mm for the fluid flowing in a direction perpendicular to the wall-like projections (W), and 7.5 kPa/10 mm for the fluid flowing in the direction parallel to the wall-like projections (W).

The resin sheet obtained was checked for its filtering performance in the same manner as in Example 8. A substantially square hole of 5 mm × 5 mm was made in the center of the resin sheet (20 mm × 20 mm). The resin sheet was sandwiched between steel plates having an air supply opening (round hole) through which an air pressure can be applied on the hole of the resin sheet, thereby sealing the tops of the wall divisions (Wd) so that a fluid could flow in and out only from the sides of the resin sheet. 0.1 g of carbon black (particle diameter: 5 to 15 pm) was placed in the substantially square hole, and air pressures at 10 kPa, 20 kPa, and 30 kPa were applied from the air supply opening of the steel plate toward the center of the substantially square hole. Air was allowed to flow such that the amount of leakage was 0.3 L/min, 0.7 L/min and 1.0 L/min when the applied air pressure was 10 kPa, 20 kPa and 30 kPa, respectively. When air was allowed to flow in a direction perpendicular to the wall-like projections (W), air flowed without short pass or a non-uniform flow as in Example 8. The fine carbon black particles were separated from the air flow in the resin sheet, the air discharged from the resin sheet contained no fine particles, and no clogging of the resin sheet occurred. On the other hand, when air was allowed to flow in a direction parallel to the wall-like projections (W), the fine particles were little separated from the air flow in the resin sheet; the fine particle concentration of air flowing out of the resin sheet was the same as that of air flowing into the resin sheet. The experimental results thus indicate that the resin sheet exhibits no filtering ability when a fluid is allowed to flow in a direction parallel to the wall-shaped projections (W).

### Example 11

A resin sheet was produced in the same manner as in Example 8 except that the shape of each cut portions (C) was changed to that shown in FIG. 5, the length (Lw) of each wall division (Wd) in the longitudinal direction was changed to 0.9 mm (70% of that of Example 8), the length (Lc) of each cut portion (C) in the longitudinal direction was changed to 0.35 mm (70% of that of Example 8), the height (H) of each wall division (Wd) was changed to 0.315 mm (70% of that of Example 8), and the shape of each shielding element (F) was changed to a shape similar to that of the shielding element of Example 8 (the height (H_{F}) was 0.28 mm (70% of that of Example 8) and the width (W_{F}) was 0.05 mm (the same as that of Example 8)).

The density of the shielding elements (F) was the same as that of Example 8.

In the resin sheet obtained, as in Example 8, water was allowed to flow in a direction perpendicular to the wall-like projections (W) and in a direction parallel to the wall-like projections (W), and the pressure losses of the fluid in the respective directions were measured. The pressure loss was 130 kPa/10 mm for the fluid flowing in a direction perpendicular to the wall-like projections (W), and 120 kPa/10 mm for the fluid flowing in the direction parallel to the wall-like projections (W).

A substantially square hole of 5 mm × 5 mm was made in the center of the resin sheet (20 mm × 20 mm). The resin sheet was sandwiched between steel plates having an air supply opening (round hole) through which an air pressure can be applied on the hole of the resin sheet, thereby sealing the tops of the wall divisions (Wd) so that a fluid could flow in and out only from the sides of the resin sheet. 0.1 g of carbon black (particle diameter: 5 to 15 pm) was placed in the substantially square hole, and air pressures at 10 kPa, 20 kPa, and 30 kPa were applied from the air supply opening of the steel plate toward the center of the substantially square hole. Air was allowed to flow such that the amount of leakage was 0.3 L/min, 0.7 L/min and 1.0 L/min when the applied air pressure was 10 kPa, 20 kPa and 30 kPa, respectively. In any flow direction, air flowed without short pass or a non-uniform flow. The fine carbon black particles were separated from the air flow in the resin sheet, the air discharged from the resin sheet contained no fine particles, and no clogging of the resin sheet occurred. The experimental results thus indicate that the resin sheet is useful as a filter that can be used by allowing a fluid to flow not only in a direction perpendicular to the wall-shaped projections (W) but also in a direction parallel to the wall-shaped projections (W).

### Reference Signs List

B: substrate
Wd: wall division
C: cut portion
P: projecting portion
F: shielding element

## Claims

1. A resin sheet comprising: a sheet-like substrate of a resin; and wall-like projections of the same resin having a certain height and standing upright on one surface of the substrate, wherein the wall-like projections are arranged on the surface of the substrate in at least 10 parallel rows with a certain spacing, and wherein a large number of the wall-like projections, which satisfy the following conditions (1) to (5), are present in parallel on the one surface of the substrate:
(1) each wall-like projection has a large number of cut portions, penetrating the wall-like projection in the thickness direction and extending from the bottom to the top of the wall-like projection, disposed at substantially equal intervals in the longitudinal direction of the wall-like projection, and the wall-like projection is divided in the longitudinal direction by the cut portions into a large number of wall divisions and forms a row of the large number of wall divisions;
(2) each wall division has substantially the same thickness throughout the entire body from the base to the top, and has no projecting portion projecting upward from the top;
(3) a cut portion in each wall-like projection faces a wall surface of a wall division in an adjacent wall-like projection;
(4) the length of each wall division in the longitudinal direction of the wall-like projection is longer than the length, in the longitudinal direction of the wall-like projection, of each cut portion located at either end of the wall division in the longitudinal direction; and
(5) the length of each wall division, sandwiched between cut portions, in the longitudinal direction of the wall-like projection is 2 to 6 times the height of the wall division.

2. The resin sheet according to claim 1, wherein said length is 0.8 to 20 mm.

3. The resin sheet according to claim 1 or 2, wherein the thickness of each wall division is 0.1 to 1.0 mm, and the height of each wall division is 0.3 to 5.0 mm.

4. The resin sheet according to any one of claims 1 to 3, wherein the distance between two adjacent wall-like projections is 0.5 to 4 times the thickness of each wall division.

5. The resin sheet according to any one of claims 1 to 4, wherein the wall-like projections are present at a density of 5 to 30 rows per cm of the width of the resin sheet and in at least 10 parallel rows.

6. A filter comprising the resin sheet according to any one of claims 1 to 5, for separating fine particles from a fluid by allowing the fluid containing the fine particles to flow on the surface of the resin sheet in a direction intersecting the longitudinal direction of the wall-like projections.

7. A method for separating fine particles from a fluid, comprising allowing the fluid containing the fine particles to flow through a filter comprising the resin sheet according to any one of claims 1 to 5, wherein the fluid is allowed to flow on the surface of the resin sheet in a direction intersecting the longitudinal direction of the wall-like projections.

8. A resin sheet for display, comprising the resin sheet according to any one of claims 1 to 5, wherein the resin sheet is formed of a transparent resin, and at least part of the tops of the wall divisions are colored.

9. A resin sheet for display, comprising the resin sheet according to any one of claims 1 to 5, wherein the resin sheet is formed of a transparent resin, and an area other than the tops of the wall divisions is colored.

10. The resin sheet according to any one of claims 1 to 5, wherein the resin sheet further satisfies the following conditions (6) to (8):
(6) a projecting portion projecting in a direction toward a cut portion is formed at one end of the top of each wall division in the longitudinal direction, whereas no projecting portion projecting in a direction toward a cut portion is formed at the other end;
(7) there is a gap between the front end of each projecting portion and a wall division located adjacent to the projecting portion via a cut portion; and
(8) each wall division has one projecting portion, and the projecting portions of all the wall divisions project in the same direction.

11. A male hook-and-loop fastener comprising the resin sheet according to claim 10.

12. The male hook-and-loop fastener according to claim 11, wherein the projection length from the base of each projecting portion is 0.05 to 5.0 mm.

13. The resin sheet according to any one of claims 1 to 5, further comprising shielding elements standing on the substrate and disposed between adjacent wall-like projections and which are configured to make the pressure loss of a fluid in the longitudinal direction of the wall-like projections 0.7 to 1.3 times the pressure loss of the fluid in a direction perpendicular to the wall-like projections.

14. The resin sheet according to claim 13, wherein each shielding element has a height which is 0.8 to 0.98 times the height of each wall division, a length in the longitudinal direction of the wall-like projections which is 0.3 to 1.0 times the length of each cut portion in the longitudinal direction of the wall-like projections, and a width which is 0.8 to 1.0 times the distance between adjacent wall-like projections, and wherein the number of the shielding elements is 0.6 to 1.0 times the number of the wall divisions, and the shielding elements are disposed uniformly between adjacent wall-like projections.

15. A filter comprising the resin sheet according to claim 13 or 14, for diffusing a fluid on the surface of the resin sheet by allowing the fluid to flow on the surface of the resin sheet in a direction intersecting the longitudinal direction of the wall-like projections or in a direction parallel to the longitudinal direction of the wall-like projections.

16. A method for diffusing a fluid on a surface of a resin sheet, comprising allowing the fluid to flow through a filter comprising the resin sheet according to claim 13 or 14, wherein the fluid is allowed to flow on the surface of the resin sheet in a direction intersecting the longitudinal direction of the wall-like projections or in a direction parallel to the longitudinal direction of the wall-like projections.

17. A filter comprising the resin sheet according to claim 13 or 14, for separating fine particles from a fluid by allowing the fluid containing the fine particles to flow on the surface of the resin sheet in a direction intersecting the longitudinal direction of the wall-like projections or in a direction parallel to the longitudinal direction of the wall-like projections.

18. A method for separating fine particles from a fluid, comprising allowing the fluid containing the fine particles to flow through a filter comprising the resin sheet according to claim 13 or 14, wherein the fluid is allowed to flow on the surface of the resin sheet in a direction intersecting the longitudinal direction of the wall-like projections or in a direction parallel to the longitudinal direction of the wall-like projections.

19. The method for separating fine particles from a fluid according to claim 19, wherein the pressure loss of the fluid in the longitudinal direction of the wall-like projections is 0.7 to 1.3 times the pressure loss of the fluid in a direction perpendicular to the wall-like projections.
